(19) Europäisches Patentamt
European Patent Office
Office européen des brevets

(11) Publication number: **0 068 773**
**B1**

(12) **EUROPEAN PATENT SPECIFICATION**

(45) Date of publication of patent specification: **12.02.86**

(51) Int. Cl.$^4$: **C 08 L 23/06,** C 08 K 5/15

(21) Application number: **82303210.7**

(22) Date of filing: **21.06.82**

(54) **Polyethylene compositions.**

(30) Priority: **22.06.81 US 275561**
**20.05.82 US 380370**

(43) Date of publication of application:
**05.01.83 Bulletin 83/01**

(45) Publication of the grant of the patent:
**12.02.86 Bulletin 86/07**

(84) Designated Contracting States:
**AT BE CH DE FR GB IT LI LU NL SE**

(56) References cited:
**GB-A-2 058 090**

**Japanese Kokai Patent No. Sho 52(1977)-152442**

(73) Proprietor: **MILLIKEN RESEARCH CORPORATION**
**Iron Ore Road**
**Spartanburg South Carolina 29304 (US)**

(72) Inventor: **Mahaffey, Robert Linn, Jr.**
**220 Oakmont Drive**
**Inman South CArolina 29340 (US)**

(74) Representative: **Perry, Robert Edward et al**
**GILL JENNINGS & EVERY 53-64 Chancery Lane**
**London WC2A 1HN (GB)**

**EP 0 068 773 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to polyolefin compositions which can have improved transparency characteristics.

Polyolefins, for example polyethylene and polypropylene, have found a wide range of applicants as packaging materials and containers in the form of films, sheets or hollow articles but, because of their poor transparency, their use has been limited. In particular, they are unsuitable as packaging materials or containers for articles such as cosmetics and foodstuffs which, it is desired, should be visible through the packaging.

Attempts have been made to improve the transparency of polyolefins by the incorporation of various additives. For instance, para-t-butylbenzoic acid and its salts, and low molecular weight waxy polyethylene and polypropylene, have been proposed as such additives. These conventional additives, however, are unable to bring about a sufficient improvement in transparency because they cause deterioration of the mechanical and chemical properties of the products, or have poor miscibility with the polyolefins.

US—A—4016118 discloses a polyolefin composition having improved transparency and reduced moulding shrinkage characteristics, which contain dibenzylidene sorbitol. GB—A—2077255 discloses further improvement in the transparency of polyolefins, without any reduction in the mechanical and chemical properties of the final product, by using additives which are also di-acetals of sorbitol, wherein one or both of the benzene ring or rings is substituted in either or both of the meta and para positions with a chlorine or bromine atom.

GB—A—2058090 discloses a composition comprising 100 parts by weight polypropylene and 0.005 to 8 parts by weight of a 1.3, 2,5-di(alkylbenzylidene)sorbitol. It is stated that the use of an anti-oxidant, together with the sorbitol, improves the mechanical strength of moulded articles prepared from the composition. In addition to the anti-oxidant, an HCl catcher such as a calcium or aluminium salt of a fatty acid may be used.

A composition according to the present invention comprises a major proportion of a linear, low density polyethylene polymer; a di-acetal of sorbitol and an aromatic aldehyde; and a di-acetal decomposition inhibitor selected from metal sequestrants, amines, alkenes, epoxides, cyclic esters, organo-metallics, acid anhydrides and reactive alcohols.

The di-acetal used in the present invention may be a condensation product of sorbitol and benzaldehyde, e.g. dibenzylidene sorbitol, or it may be a condensation product of sorbitol and a substituted benzaldehyde. Since the sorbitol is derived from two aldehyde molecules per sorbitol molecule, any given di-acetal may be derived from a mixture of aldehydes; it may include, for instance, one unsubstituted and one substituted benzaldehyde substituent, or it may include two differently substituted benzaldehydes. Ring substituents which may be present may be at any of the ortho, meta and para positions. Suitable substituents include lower alkyl, e.g. $C_{1-5}$ alkyl, hydroxy, methoxy, mono- and di-alkylamino, and amino groups, and halogen, e.g. fluorine, chlorine or bromine, atoms. Preferred di-acetals for use in the present invention include dibenzylidene sorbitol; di-p-chlorobenzylidene sorbitol; di-m-chlorobenzylidene sorbitol; o-benzylidene-o-p-chlorobenzylidene sorbitol; di-m-bromobenzylidene sorbitol; bis(3,4-chlorobenzylidene) sorbitol; and di-tolylidene sorbitol. The most preferred di-acetal is di-p-chlorobenzylidene sorbitol.

The di-acetals may be conveniently prepared by a variety of techniques, some of which are known in the art. Generally, such procedures comprise reaction of one mole of D-sorbitol with about two moles of aldehyde in the presence of an acid catalyst. The temperature employed in the reaction will vary widely depending upon the characteristics, such as the melting point, of the aldehyde or aldehydes employed as a starting material. The reaction medium may be aqueous or non-aqueous. A preferred method of preparation is as described in U.S. Patent Specification No. 3,721,682, not only for the unsubstituted benzylidene sorbitols described therein, but also for the substituted di-acetals disclosed herein.

On preparation, the di-acetal may contain a minor or even a major proportion of mono-acetal and tri-acetal as impurities. Although it may not always be necessary to remove these impurities prior to incorporation of the di-acetal into the polyolefin, it may be desirable to do so and such purification may serve to enhance the transparency of the resin produced in the invention. Purification of the di-acetal may be accomplished by, for instance, extracting tri-acetal impurities with a relatively non-polar solvent. Such extraction can give a di-acetal which is at least 90, and even up to 95, % pure.

The di-acetal is used, in this invention, in an amount sufficient to improve the transparency of the polymer. This amount must usually be at least 0.01, and is generally from 0.01 to 5, preferably 0.1 to 2, % by weight, based upon the total weight of the composition. When the content of di-acetal is more than about 2% by weight, no additional advantage may be observed.

The polyolefin polymers used in the present invention are linear, low density polyethylene polymers (LLDPE), usch as Union Carbide's G-Resin 7144. LLDPE polymers have been developed as a result of research into catalyst systems which have permitted the polymerisation of ethylene with a small amount of a comonomer at lower pressures and temperatures than were used previously. Such processing provides a resin having fewer and shorter sidechains on the polymer chain, and greater durability, than the conventional high pressure polyethylene resins.

Catalyst systems used for the production of such polyolefin polymers are usually of the Ziegler-Natta

type which may employ titanium tetrachloride and trialkylaluminium compounds. In addition, at least one other metallic species, for instance, magnesium chloride, may be added to cause the resulting polymer to have the desired characteristics. Moreover, the catalyst may be impregnated on a support such as silica. Such a system is disclosed in European Patent Specification No. 43,220. Other metals may be used in the catalyst system, including vanadium, copper and zirconium.

When the polymerisation is complete, it is usually necessary at least partially to remove or deactivate the catalyst residue which is acidic in nature and can seriously affect the performance of the resin or of the various stabilising additives compounded into it. For instance, the interaction of antioxidants with catalyst residues in polyolefins has been studied by J. E. Kresta, Tech. Pap. Reg. Tech. Conf. Soc. Plast. Eng. (1980) 478. Removal or deactivation may be accomplished in a number of ways, including treatment of the crude polymer with alcohols, olefins, epoxides, esters, ammonia, phosphorous acid esters or steam. It is believed that such treatment inactivates the offending species in the polymer, possibly sequestering the metals by co-ordination, rendering them inactive by reaction with the metal chlorides present and/or by neutralising the hydrogen chloride which can be produced from them, or physically washing away the acidic species. While such processes serve to reduce the amount of harmful species present in the polymer, they may not be totally efficient. Often, therefore a residual catalyst may be present which is potentially harmful to the polymer directly or indirectly by reaction with stabilising additives.

It is theorised that such catalyst residues are responsible for the lack of improvement in clarity when certain otherwise effective di-acetals are incorporated into polyolefins and copolymers which have a high catalyst residue. This lack of improvement is particularly noticeable in certain polyethylenes which have ash contents greater than 500 ppm. In these cases, the decomposition of the di-acetal is obvious from the characteristic odour emanating from the resin after it has been processed with the di-acetal. This odour is due to the aldehydes from which the acetal is derived. In addition, the aldehyde can be quantitatively determined by extraction of the polymer with a suitable solvent and analysis of the extract by liquid chromatography.

It has been found that the addition of certain co-additives, along with the di-acetal in polyolefins having high catalyst residues, enables the achievement of improved clarity over that obtained using the di-acetal alone. These co-additives may serve as acid acceptors and/or metal deactivators which prevent acidic species and/or metals in the polymer from catalysing the decomposition of the di-acetal.

Di-acetals are typically unstable in the presence of acids and particularly so when water, e.g. from the atmosphere, is also present. Consequently, these co-additives, herein referred to as di-acetal decomposition inhibitors, are provided in the composition in an amount sufficient to inhibit decomposition of the di-acetal compound. This amount may be from 0.01 to 2, preferably 0.05 to 1, % by weight based on the weight of the composition. It is not necessary completely to prevent or eliminate the undesired phenomenon referred to, but simply to ensure that the phenomenon occurs to a lesser extent than it otherwise would.

Acids which may catalyse this decomposition may be of two general types. The first type, when dissolved in water, gives a pH of less than 7; an example is hydrogen chloride. The second type (Lewis acids) is a molecule or ion such Ti(IV) which can accept a pair of electrons from a donor atom.

As a result of the presence of high amounts of residual acids present in certain polyolefins, an acid acceptor may be employed along with the di-acetal to achieve improved clarity. The acid acceptor should not of itself impart any haze to the polyolefin. The acid acceptor may be classified in several ways. For instance, it may be (1) a substance which may co-ordinate with or sequester an acidic molecule or ion to prevent the acid from reacting further in an undesirable way; (2) a substance which can react with the acid to give a harmless salt; or (3) a substance which can react with an acid to give a neutral compound which cannot react further in an undesirable way. The acid acceptor may function by more than one of the given mechanisms.

Examples of Class 1 include phosphites, carboxylic acid salts (especially fatty acid salts), amines (especially fatty amines), alkanolamines and hindered amines (e.g., Tinuvin 770), salts of amino-acids, polyalkylene glycols, phosphates, phosphines, hydroxy carbonyl compounds, dicarbonyl compounds (e.g., acetylacetone), polyhydroxy compounds, crown ethers, hydrazones and hydrazides. ("Tinuvin" may be a registered Trade Mark). Typical Class 1 type complexes are shown below:

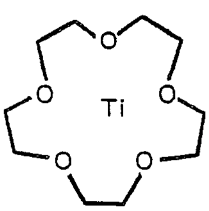 + 4 $Ti(S_2CN(CH_3)_2)_4$ 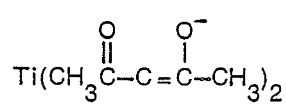

Examples of Class 2 include amines and other bases which may neutralise acids such as hydrogen chloride, as follows:

$$HCl + (C_4H_9)_3N \rightarrow (C_4H_9)_3N^{+}—HCl^{-}$$

Examples of Class 3 include epoxides, alkenes, cyclic esters (including strained cyclic esters) and

certain organometallic compounds which react with acids such as hydrogen to give a harmless neutral compound. Other examples include acid anhydrides and reactive alcohols, e.g., benzyhydrol. Class 3 mechanisms are illustrated below:

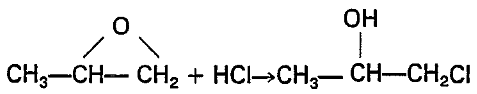

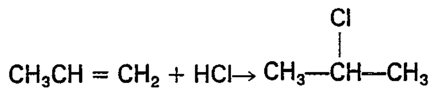

$$(C_4H_9)_2Sn(SC_{12}H_{25})_2 + HCl \rightarrow (C_4H_9)_2SnCl(SC_{12}H_{25}) + C_{12}H_{25}SH$$

The decomposition inhibitors which are most preferred are phosphites such as Weston 618 and Weston 619 available from Borg Warner Corp. Weston 618 has the following structural formula:

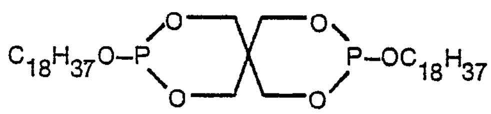

Weston 619 has the same formula as Weston 618 and it further includes about 1 percent triisopropanolamine. ("Weston" may be a registered Trade Mark). Other decomposition inhibitors which may be used include fatty acid salts such as calcium stearate, fatty amines such as octadecylamine, alkanolamines such as triethanolamine and triisopropanolamine, polyalkylene glycols such as polyethylene glycol and polypropylene glycol, crown ethers and non-ionic surfactants. Other di-acetal decomposition inhibitors which may be used include phosphates, amino-acids, hydroxycarbonyl compounds, dicarbonyl compounds, hydroxycarboxylic acids and polyhydroxy compounds.

A composition of the present invention may be prepared by adding a desired amount of the di-acetal and the di-acetal decomposition inhibitor directly to the polymer, and merely mixing the resulting composition by any suitable means. Alternatively, a concentrate containing as much as about 10% by weight of the di-acetal and as much as 10% by weight of the di-acetal decomposiiton inhibitor in a polymeric masterbatch may be prepared, and subsequently mixed with the resin.

Other additives, such as a transparent colouring agent or plasticiser (e.g., dioctyl phthalate, dibutyl phthalate, diotyl sebacate or dioctyl adipate), can be added to a composition of the present invention, so long as they do not adversely affect the sought-after improvement of transparency of the product. It has been found that plasticisers such as those exemplified above may in fact aid in the improvement of the transparency which can be caused by the di-acetal.

It may also be desirable to employ the di-acetal in combination with other conventional additives having known transparency-improving effects such as, for instance, para-t-butylbenzoic acid and its salts, and low molecular weight waxy polypropylene. Generally at least 10, preferably about 25, or even 50 or more, % of the clarity-improving components will be the di-acetal, with the remainder being composed of other known clarifying agents, plasticisers, etc.

A composition of the present invention can be suitable for use as a packing material and container material for cosmetics and foodstuffs. For such purposes, the composition can give films, sheets or hollow articles having good transparency characteristics and mechanical and chemical properties.

The following Examples illustrate the invention. All parts and percentages given in these Examples are by weight unless otherwise indicated. "G-Resin" and "Thermolite" may be registered Trade Marks. The haze values were measured according to ASTM D1003-61 ("Haze and Luminous Transmission of Transparent Plastics").

Example 1

A concentrate was prepared by mixing 100 g linear, low density polyethylene (available from Union Carbide as G-Resin 7144), 2.5 g di(p-chlorobenzylidene)sorbitol and 2.5 g Weston 619 in a laboratory blender. This concentrate was added to 895 g of G-Resin 7144 and thoroughly stirred in a Welex mixer at 1000 rpm for 5 minutes. The mixture was then extruded at 240°C and injection-moulded at 232°C into plaques of approximately 1.25 mm thickness. The haze value was 47%.

By way of comparison, a sample of the linear, low density polyethylene (G-Resin 7144) had a haze value of 97%. Further, when the procedure of Example 1 was repeated with the omission of the Weston 619 as a component of the concentrate, the haze value was 97%.

Examples 2 to 8

The procedure fo Example 1 was repeated seven times, in each case with the substitution of a different di-acetal decomposition inhibitor for the Weston 619 used in Example 1. The specific inhibitors, the amount employed, and the resultant haze values, are tabulated below. Thermolite 31 is an organotin stabiliser available from M&T Chemicals, Inc. Rahway, New Jersey; Tinuvin 770 is bis(2,2,6,6-tetramethyl-4-piperidinyl) sebacate.

| Example | Inhibitor | Concentration % | Haze % |
|---|---|---|---|
| 2 | Calcium Stearate | 0.10 | 55 |
| 3 | Octadecylamine | 0.10 | 55 |
| 4 | Triisopropanolamine | 0.08 | 62 |
| 5 | Crown Ether (15-Crown-5) | 0.10 | 39 |
| 6 | α-Hexadecane epoxide | 0.25 | 67 |
| 7 | Thermolite 31 | 0.25 | 48 |
| 8 | Tinuvin 770 | 0.25 | 40 |

**Claims**

1. A composition which comprises a major proportion of a linear, low density polyethylene polymer; a di-acetal of sorbitol and an aromatic aldehyde; and a di-acetal decomposition inhibitor selected from metal sequestrants, amines, alkenes, epoxides, cyclic esters, organometallics, acid anhydrides and reactive alcohols.

2. A composition according to claim 1, wherein the sequestrant is selected from phosphites, carboxylic acid salts, amines, salts of amino-acids, polyalkylene glycols, phosphates, phosphines, hydroxy carbonyl compounds, dicarbonyl compounds, polyhydroxy compounds, crown ethers, hydrazones and hydrazides.

3. A composition according to claim 1 or claim 2, wherein the di-acetal is selected from dibenzylidene sorbitol; di-p-chlorobenzylidene sorbitol; di-m-chlorobenzylidene sorbitol; O-benzylidene-o-p-chlorobenzylidene sorbitol; di-m-bromobenzylidene sorbitol; bis(3,4-dichlorobenzylidene) sorbitol; and di-tolylidene sorbitol.

4. A composition according to claim 3, wherein the di-acetal is di-p-chlorobenzylidene sorbitol.

**Patentansprüche**

1. Eine Zusammensetzung, welche einen Hauptanteil an einem linearen Polyethylenpolymer niederiger Dichte; ein Diacetal aus Sorbit und einem aromatischen Aldehyd; und einen Diacetalzersetzungs-Inhibitor, ausgewählt unter Metallsequestrierungsmitteln, Aminen, Alkenen, Epoxiden, cyclischen Estern, metallorganischen Verbindungen, Säureanhydriden und reaktionsfähigen Alkoholen, enthält.

2. Zusammensetzung nach Anspruch 1, worin das Sequestrierungsmittel ausgewählt ist unter Phosphiten, Carbonsäuresalzen, Aminen, Salzen von Aminosäuren, Polyalkylenglycolen, Phosphaten, Phosphinen, Hydroxycarbonylverbindungen, Dicarbonylverbindungen, Polyhydroxyverbindungen, Kronenethern, Hydrazonen und Hydraziden.

3. Zusammensetzung nach Anspruch 1 oder 2, worin das Diacetal ausgewählt ist unter Dibenzylidensorbit; Di-p-chlorbenzylidensorbit; Di-m-chlorbenzylidensorbit; O-Benzyliden-O-p-chlorbenzylidensorbit; Di-m-brombenzylidensorbit; Bis(3,4-dichlorbenzyliden)sorbit; und Di-tolylidensorbit.

4. Zusammensetzung nach Anspruch 3, worin das Diacetal Di-p-chlorbenzylidensorbit ist.

**Revendications**

1. Composition comprenant une proportion majoritaire d'un polymère polyéthylène linéaire basse densité; un di-acétal du sorbitol et une aldhéyde aromatique; et une inhibiteur de décomposition du diacétal choisi parmi les séquestrants des métaux, les amines, les alkènes, les époxydes, les esthers cycliques, les organo métalliques, les anhydrides d'acides et les alcools réactifs.

2. Composition selon la revendication 1, dans laquelle le séquestrant est choisi parmi les phosphites, les sels des acides carboxyliques, les amines, les sels des acides aminés, les polyalkylènes glycols, les phosphates, les phosphines, les composés hydroxy carbonyles, les composés dicarbonyles, les composés polyhydroxy, les éthers couronnes, les hydrazones et les hydrazides.

3. Composition selon la revendication 1 ou 2, dans laquelle le di-acétal est choisi parmi le dibenzylidène sorbitol; le di-p-chlorobenzylidène sorbitol; le di-m-chlorobenzylidène sorbitol; l'o-benzylidène-o-p-chlorobenzylidène sorbitol; le di-m-bromobenzylidène sorbitol; le bis(3,4-dichloro-benzylidène) sorbitol; et le di-tolylidène sorbitol.

4. Composition selon la revendication 3, dans laquelle le di-acétal est le di-p-chlorobenzylidène sorbitol.